# EUROPÄISCHE PATENTSCHRIFT

(11) **EP 0 546 244 B1**
(45) Veröffentlichungstag und Bekanntmachung des Hinweises auf die Patenterteilung: **11.12.1996**
(21) Anmeldenummer: 92110095.4
(22) Anmeldetag: 16.06.1992
(51) Int. Cl.: B60Q 11/00

(54) **Schaltungsanordnung für ein Zugfahrzeug**
Circuit device for vehicle
Circuit pour véhicule

(30) Priorität: 28.10.1991 DE 4135546
(43) Veröffentlichungstag der Anmeldung: 16.06.1993
(60) Teilanmeldung: 96102072.4
(73) Patentinhaber: Gebhard, Angela Barbara, 76316 Malsch (DE)
(72) Erfinder: Gebhard, Dietrich, (DE)
(74) Vertreter: Weller, Wolfgang, Dr.rer.nat.

(56) Entgegenhaltungen:
- DE-A- 1 923 506
- DE-A- 3 531 560
- DE-A- 3 724 916
- US-A- 3 882 321

## Beschreibung

Die Erfindung betrifft eine Schaltungsanordnung für ein Zugfahrzeug eines aus dem Zugfahrzeug und einem elektrisch an das Zugfahrzeug anschließbaren Hänger bestehenden Wagenzuges, wobei das Zugfahrzeug einen Blinkgeber und einen Fahrtrichtungsschaltung zum Betreiben seiner Blinklichtanlage aufweist, die über die Schaltungsanordnung mit einer Blinklichtanlage des Hängers verbindbar ist, deren Lampen je über eine von dem Blinkgeber angesteuerte, zugeordnete Treiberschaltung mit hochohmigen Eingang betrieben werden, wobei der Blinkgeber den Ausfall einer angesteuerten Lampe der Blinklichtanlage des Zugfahrzeuges als Fehlerzustand erkennt und diesen Fehlerzustand meldet, und wobei die Schaltungsanordnung einen Ausfall einer angesteuerten Lampe der Blinklichtanlage des Hängers erkennt und bei Vorliegen eines solchen Ausfalls einen von dem Blinkgeber erkennbaren Fehlerzustand hervorruft.

Eine derartige Schaltungsanordnung gemäß dem Oberbegriff des Anspruchs 1 ist aus der DE-C-4 010 765 bekannt.

Die bekannte Schaltungsanordnung wird beim Nachrüsten eines Zugfahrzeuges auf Hängerbetrieb in das Zugfahrzeug eingebaut, damit auch ohne das Auswechseln des bisherigen Blinkgebers der Fahrzeugführer auch den Ausfall einer der Lampen der Blinklichtanlage des Hängers erkennen kann. Die in Zugfahrzeugen eingebauten Blinkgeber sind nämlich nur dazu ausgelegt, je Fahrtrichtung zwei Lampen zu treiben und beim Ausfall einer der beiden Lampen durch eine veränderte Blinkfrequenz diesen Fehlerzustand anzuzeigen.

Bei der bekannten Schaltungsanordnung werden die Lampen der Blinklichtanlage des Hängers über hochohmige Treiberschaltungen betrieben, die ihrerseits von dem Blinkgeber angesteuert werden, ohne diesen jedoch zu belasten. Wenn die bekannte Schaltungsanordnung erkennt, daß eine angesteuerte Lampe der Blinklichtanlage des Hängers ausgefallen ist - beispielsweise durch Glühfadenbruch -, so trennt sie eine der beiden Lampen der Blinklichtanlage des Zugfahrzeuges von dem Blinkgeber ab und betreibt diese so abgetrennte Lampe über die Treiberschaltung, die bisher die nun ausgefallene und daher funktionslose Lampe der Blinklichtanlage des Hängers gespeist hatte.

Um dies zu ermöglichen, weist die bekannte Schaltungsanordnung ein Relais auf, das in den Strompfad zwischen der vorderen und der hinteren Lampe der Blinklichtanlage des Zugfahrzeuges (je Fahrtrichtungsseite) geschaltet ist. Beim Einbau der Schaltungsanordnung muß also der Strompfad von der vorderen zu der hinteren Lampe der Blinklichtanlage des Zugfahrzeuges aufgetrennt und die Schaltungsanordnung entsprechend zwischengeschaltet werden.

Weiterhin weist die bekannte Schaltungsanordnung eine Hängererkennungsschaltung auf, die an ihrem Ausgang ein Signal erzeugt, das anzeigt, ob ein Hänger elektrisch angeschlossen ist oder nicht. Dieses Ausgangssignal ist in unterschiedlicher Weise mit einem Ausgangssignal einer Fehlererkennungsschaltung verknüpft, die für das Erfassen eines Ausfalls einer angesteuerten Lampe der Blinklichtanlage des Hängers vorgesehen ist. Anhand der Verknüpfung der Signale der Fehlererkennungsschaltung, der Hängererkennungsschaltung und des Blinkgebers selbst ermittelt die bekannte Schaltungsanordnung, ob eine Lampe der Blinklichtanlage des Hängers oder eine Lampe der Blinklichtanlage des Zugfahrzeuges über die hochohmige Treiberschaltung angesteuert werden soll.

Ist eine Lampe der Blinklichtanlage des Hängers ausgefallen, so wird dem Blinkgeber sozusagen eine der Lampen der Blinklichtanlage des Zugfahrzeuges "weggenommen", so daß der Blinkgeber nur noch die andere Lampe der Blinklichtanlage des Zugfahrzeuges zu versorgen hat und folglich vermeintlich den Ausfall einer der beiden Lampen erkennt und dies durch eine veränderte Blinkfrequenz anzeigt.

Wegen der verschiedenartigen Verknüpfungen der unterschiedlichen Signale ist die bekannte Schaltungsanordnung mit einer großen Anzahl von Bauteilen versehen und schaltungstechnisch aufwendig realisiert. Auf diese Weise sind nicht nur die Material- sondern auch die Produktionskosten für die bekannte Schaltungsanordnung sehr hoch.

Auf das Nachrüsten von als Zugfahrzeug vorgesehenen Kraftfahrzeugen entweder mit einer der bekannten Schaltungsanordnung entsprechenden Schaltung oder mit einem neuen Blinkgeber, der drei Lampen je Fahrtrichtung betreiben und überwachen kann, kann jedoch nicht verzichtet werden, da aus Sicherheitsgründen der Fahrzeugführer auch darüber informiert sein muß, ob eine Lampe der Blinklichtanlage des Hängers ausgefallen ist.

Eine Parallelschaltung der Lampen der Blinklichtanlage des Hängers zu den Lampen der Blinklichtanlage des Zugfahrzeuges ist darüberhinaus bei moderneren Zugfahrzeugen nicht möglich, da bei diesen die Lampen der Beleuchtungs- und Signalanlage von einer Sicherungsschaltung in Form einer Lampentestüberwachung überwacht werden. Die Lampentestüberwachung zeigt bereits bei geringen Abweichungen des Lampenstromes von dem vorgegebenen Sollwert eine Fehlfunktion an und öffnet ggf. den Lampenstromkreis. Eine Parallelschaltung von entsprechenden Lampen des Zugfahrzeuges mit Lampen des Hängers führt wegen des nun doppelt so großen Stromes dazu, daß die Sicherungsschaltung unerwünschterweise anspricht.

Hiervon ausgehend ist es Aufgabe der vorliegenden Erfindung, eine Schaltungsanordnung der eingangs genannten Art dahingehend weiterzubilden, daß die vorstehend genannten Nachteile vermieden werden. Insbesondere soll die neue Schaltungsanordnung bei geringem Bauteilbedarf einen einfachen konstruktiven Aufbau ermöglichen.

Diese Aufgabe wird erfindungsgemäß dadurch gelöst, daß die Schaltungsanordnung bei Ausfall einer angesteuerten Lampe der Blinklichtanlage des Hängers in die von dem Blinkgeber angesteuerten und mit einem Betriebsstrom versorgten entsprechenden Lampen der Blinklichtanlage des Zugfahrzeuges zusätzlich einen Fehlerstrom einspeist.

Die der Erfindung zugrundeliegende Aufgabe wird auf diese Weise vollkommen gelöst. Weil die Lampen der Blinklichtanlage des Zugfahrzeuges bei Ausfall einer Lampe der Blinklichtanlage des Hängers jetzt sowohl über einen von dem Blinkgeber stammenden Betriebsstrom als auch über einen von der Schaltungsanordnung zusätzlich eingespeisten Fehlerstrom betrieben werden, ist die Stromstärke des von dem Blinkgeber abgegebenen Betriebsstromes im Fehlerfall geringer als bei fehlerfreiem Betrieb. Durch diese schaltungstechnisch sehr einfache Maßnahme wird der von dem Blinkgeber abgegebene Betriebsstrom so weit reduziert, daß der Blinkgeber dies als Fehlerzustand erkennt und durch eine veränderte Blinkfrequenz anzeigt. Schaltungstechnisch ist diese Maßnahme insofern von Vorteil, als lediglich bei Erkennen des Ausfalls einer Lampe der Blinklichtanlage des Hängers ein Schalter geschlossen werden muß, der den Fehlerstrom einspeist.

In einem Ausführungsbeispiel der neuen Schaltungsanordnung ist es bevorzugt, wenn der in einer Lampe fließende Betriebsstrom und der in der selben Lampe fließende Fehlerstrom etwa die gleiche Größenordnung aufweisen.

Durch diese durch einfache Dimensionierung von Vorwiderständen o.ä. zu erreichende Maßnahme ist sichergestellt, daß der Betriebsstrom im Fehlerfall so weit reduziert wird, daß der Blinkgeber auch bei ungünstiger Bauteilstreuung den Fehlerzustand sicher erkennt und meldet.

Ferner ist es bevorzugt, wenn die Schaltungsanordnung eine Fehlererkennungsschaltung aufweist, die bei mit der Schaltungsanordnung verbundener Blinklichtanlage des Hängers den Ausfall einer Lampe der Blinklichtanlage erkennt und ein Schaltorgan betätigt, das den Fehlerstrom einspeist.

Bei dieser Maßnahme ist von Vorteil, daß lediglich pro Fahrtrichtungsseite eine Fehlererkennungsschaltung und ein Schaltorgan vorzusehen sind, was zu einem sehr geringen Bauteil bedarf und einem einfachen konstruktiven Aufbau führt.

Weiterhin ist es bevorzugt, wenn das Schaltorgan ein Relais mit einem Schließkontakt ist.

Bei dieser Maßnahme ist von Vorteil, daß mit dem Relais ein sehr preiswerter Massenartikel als Schaltorgan vorgesehen wird.

Alternativ ist es auch bevorzugt, wenn das Schaltorgan ein Halbleiterschalter ist.

Bei dieser Maßnahme nun ist von Vorteil, daß die Baugröße von Halbleiterschaltern sehr klein ist und die Halbleiterschalter andererseits unmittelbar von anderen Logik-Schaltungsbauteilen angesteuert werden können, so daß der konstruktive Aufbau sehr einfach ist.

Weiterhin ist es bevorzugt, wenn zwischen dem Eingang der Treiberschaltung und dem Blinkgeber ein Zeitschaltglied angeordnet ist.

Durch diese schaltungstechnisch einfache Maßnahme wird dafür gesorgt, daß auch in dem Fall, in dem ein Fehlerstrom eingespeist wird, die Treiberschaltung nach einer bestimmten Zeit nicht mehr angesteuert wird, obwohl der Fehlerstrom sich dem Taktsignal des Blinkgebers überlagert.

Hier ist es bevorzugt, wenn das Zeitschaltglied ein Monoflop ist.

Diese Maßnahme ist unter konstruktiven Gesichtspunkten von Vorteil, denn ein Monoflop ist als integriertes Bauteil erhältlich, und muß nicht diskret aufgebaut werden.

Weiterhin ist es bevorzugt, wenn das Schaltorgan nach seiner Betätigung durch die Fehlererkennungsschaltung über eine Verzögerungsschaltung wieder in seinen Ruhezustand versetzt wird.

Diese Maßnahme hat die gleichen Vorteile, wie die oben bereits im Zusammenhang mit dem Zeitschaltglied erwähnten, der Fehlerstrom wird nämlich nach einer gewissen Zeitspanne wieder abgeschaltet.

In einer Weiterbildung ist es bevorzugt, wenn der Fehlerstrom über eine Widerstandsstrecke in die Lampen der Blinklichtanlage des Zugfahrzeuges eingespeist wird und wenn eine Meßschaltung vorgesehen ist, die über der Widerstandsstrecke einen Spannungsabfall mißt und in Abhängigkeit von dem Spannungsabfall den Fehlerstrom wieder abschaltet.

Diese Maßnahme ist alternativ zu der Verzögerungsschaltung oder dem Zeitschaltglied zu sehen, hat aber im wesentlichen die gleichen Vorteile.

Bei einem weiteren Ausführungsbeispiel ist es bevorzugt, wenn die Schaltungsanordnung je Fahrtrichtungsseite mit je einer Baugruppe im Strompfad zwischen der vorderen und der hinteren Lampe der Blinklichtanlage des Zugfahrzeuges liegt und den Fehlerstrom nur in die jeweils hintere Lampe einspeist. Auch diese Maßnahme ist konstruktiv von Vorteil, obwohl nämlich der Strompfad zwischen der vorderen und der hinteren Lampe der Blinklichtanlage des Zugfahrzeuges jeweils aufgetrennt und die neue Schaltungsanordnung zwischengeschaltet werden muß, der Einbauaufwand sich ggf. also etwas erhöht, ist die Schaltungsanordnung selbst konstruktiv sehr einfach aufgebaut, da insbesondere die Dimensionierung des Fehlerstromes hier unkritisch ist.

Hier ist es bevorzugt, wenn die Baugruppe je eine Diode umfaßt, die im Strompfad zwischen der vorderen und der hinteren Lampe der Blinklichtanlage des Zugfahrzeuges liegt.

Auch diese Maßnahme ist konstruktiv von Vorteil, durch die Diode wird nämlich verhindert, daß der Fehlerstrom auch in die vordere Lampe der Blinklichtanlage des Zugfahrzeuges eingespeist wird. Der Fehlerstrom gelangt also nur in die hintere Lampe, während der Blinkgeber überwiegend nur noch die vordere Lampe treibt, obwohl die hintere Lampe elektrisch immer noch mit dem Blinkgeber verbunden ist. Auf diese Weise wird also sichergestellt, daß der von dem Blinkgeber bei Ausfall einer Lampe der Blinklichtanlage des Hängers abgegebene Betriebsstrom sich soweit reduziert, daß der Blinkgeber einen Fehlerzustand erkennt und meldet.

Hierbei ist es bevorzugt, wenn der Fehlerstrom an der Kathodenseite der Diode eingespeist wird.

Durch diese Maßnahme wird erreicht, daß der Fehlerstrom nicht durch die Diode selbst fließen kann.

Weiterhin ist es bevorzugt, wenn von der Anodenseite der Diode eine Ansteuerleitung zu der Treiberschaltung führt.

Bei dieser konstruktiv vorteilhaften Maßnahme wird erreicht, daß zusammen mit dem Ende der Taktzeit des Blinkgebers auch die Treiberschaltung abgeschaltet wird, woraufhin die Fehlererkennungsschaltung das betreffende Schaltorgan wieder öffnet.

Alternativ ist es in einem anderen Ausführungsbeispiel bevorzugt, wenn von der Anodenseite der Diode eine Ansteuerleitung zu dem Schaltorgan führt.

Diese Maßnahme hat den selben Vorteil wie die soeben erwähnte, der Fehlerstrom wird nämlich wieder abgeschaltet, sobald die Taktzeit (Einschaltzeit) des Blinkgebers beendet ist und somit eine sozusagen "Selbsthaltefunktion" des Schaltorganes verhindert.

Weiterhin ist es bevorzugt, wenn die Schaltungsanordnung eine Hängererkennungsschaltung aufweist, die eine mit der Schaltungsanordnung verbundene Blinklichtanlage eines Hängers erkennt.

Diese Maßnahme ist insbesondere konstruktiv von Vorteil, weil jetzt sozusagen automatisch erkannt wird, ob ein Hänger angeschaltet ist oder nicht. Der Fahrzeugführer muß folglich keine Schalter umlegen, um die Schaltungsanordnung in einen entsprechenden Betriebszustand zu bringen. Weiterhin ist es hier möglich, die Fehlererkennungsschaltung schaltungstechnisch sehr einfach auszulegen, denn ohne die Hängererkennungsschaltung wäre es schwierig, zu entscheiden, ob tatsächlich eine defekte Lampe in der Blinklichtanlage des Hängers vorhanden ist, oder ob gar kein Hänger eingeschaltet ist.

Ferner ist es bevorzugt, wenn die Schaltungsanordnung einer Interface-Schaltung zugeordnet ist, die Lampen einer Beleuchtungsanlage des Zugfahrzeuges mit zugeordneten Lampen einer Beleuchtungsanlage des Hangers über Treiberschaltungen verbindet, die von den einzelnen Lampen des Zugfahrzeuges Signalspannungen hochohmig abgreifen.

Diese Maßnahme ist von Vorteil, weil die Signalspannungen der Lampen des Zugfahrzeuges lediglich als Steuersignale für die Treiberschaltungen verwendet werden, wobei es wegen des hochohmigen Abgreifens der Signalspannungen zu keinem erhöhten Stromfluß kommt. Die Sicherungsschaltungen von modernen Zugfahrzeugen werden somit nicht ansprechen, denn trotz eines elektrisch angeschlossenen Hängers werden sie keine quasi erhöhte Stromaufnahme durch die Lampen des Zugfahrzeuges feststellen. Bei einem Kurzschluß in dem Hänger wird zwar das Bordnetz des Zugfahrzeuges vorübergehend zusammenbrechen können, aber unmittelbar nach dem Abkoppeln des Hängers ist die Beleuchtungs- und Signalanlage des Zugfahrzeuges wieder betriebsbereit. Es muß jetzt lediglich eine Fehlersuche in dem Hänger durchgeführt werden, bei dem Zugfahrzeug ist höchstens die Hauptsicherung auszuwechseln. Es ist ggf. lediglich ein Reset-/Rücksetztaster erforderlich, der die Schaltungsanordnung wieder in einen betriebsfähigen Zustand bringt.

In diesem Ausführungsbeispiel ist es bevorzugt, wenn die Treiberschaltungen an ihrem Ausgang kurzschlußfest sind.

Diese Maßnahme ist besonders vorteilhaft, weil ein Kurzschluß in dem Hänger nicht zu einem Defekt an der in dem Zugfahrzeug angebrachten Schaltungsanordnung führt. Auf diese Weise kann der defekte Anhänger abgekoppelt und ein neuer Hänger angekoppelt werden, ohne daß weitere Maßnahmen an dem Zugfahrzeug erforderlich wären.

Hier ist es ferner bevorzugt, wenn bei mit der Interface-Schaltung verbundener Beleuchtungsanlage des Hängers die Hängererkennungsschaltung mit Lampen der Beleuchtungsanlage des Hängers verbunden ist.

Auf diese schaltungstechnisch einfache Weise erkennt die Hängererkennungsschaltung anhand der über die Lampen des Hängers zur Verfügung stehenden Masse, daß ein Hänger angeschaltet wurde.

Ferner ist es bevorzugt, wenn bei mit der Interface-Schaltung verbundener Beleuchtungsanlage die Hängererkennungsschaltung mit einem Hängererkennungskontakt verbunden ist, der auf Masse liegt.

Diese Maßnahme wird vorteilhafter Weise insbesondere dann verwendet, wenn die Übergabeeinrichtung einen 13-poligen Stecker nach der Vornorm DIN 72570 aufweist, nach der eine besondere Klemme als Hängererkennung vorgesehen ist.

Weiterhin ist es bevorzugt, wenn die Hängererkennungsschaltung mit ausgewählten Treiberschaltungen derart verbunden ist, daß sie einen Stromfluß durch die entsprechenden Lampen erkennt.

Auf diese schaltungstechnisch einfache Weise wird sichergestellt, daß die Hängererkennungsschaltung auch dann sicher einen angeschalteten Hänger erkennt, wenn kein Hängererkennungskontakt vorhanden ist und wenn andererseits sämtliche Lampen des Hängers eingeschaltet sind. Bei eingeschalteten Lampen des Hängers fällt über den Lampen nämlich eine Spannung ab, die etwa der Betriebsspannung des Zugfahrzeuges entspricht, so daß die Hängererkennungsschaltung, die auf Masse-Erkennung ausgelegt ist, keine Masse mehr erkennen könnte. Diese mögliche Fehlerquelle wird dadurch ausgeschaltet, daß die Hängererkennungsschaltung zusätzlich den Stromfluß durch ausgewählte Lampen des Hängers überwacht.

Ferner ist es hier bevorzugt, wenn die Fehlererkennungsschaltung den Spannungsabfall über den Lampen der Blinklichtanlage des Hängers mißt.

Auch diese Maßnahme ist schaltungstechnisch von Vorteil, denn anhand des Spannungsabfalls läßt sich unmittelbar erkennen, ob die entsprechende Lampe im Leerlaufzustand und somit defekt ist.

Weiterhin ist es hier bevorzugt, wenn die Fehlererkennungsschaltung ein Integrierglied aufweist, derart, daß bei Blinken der Lampe der Blinklichtanlage des Hängers die Fehlererkennungsschaltung an ihrem Ausgang ein konstantes Signal abgibt.

Durch diese konstruktiv und technisch einfache Maßnahme wird ein konstantes Bewertungssignal zur Verfügung gestellt, obwohl die Spannung über der Blinklampe des Hängers periodisch ein- und ausgeschaltet wird.

In diesem Ausführungsbeispiel ist es ferner bevorzugt, wenn die Fehlererkennungsschaltung und die Hängererkennungsschaltung an ihren Ausgängen über eine Logik-Schaltung miteinander verknüpft sind, wobei die Logik-Schaltung in Abhängigkeit von den Signalen der Fehlererkennungsschaltung und der Hängererkennungsschaltung das Schaltorgan einschaltet.

Bei dieser Maßnahme ist es von Vorteil, daß die Informationen, die die Fehlererkennungsschaltung und die Hängererkennungsschaltung liefern, unmittelbar dazu verwendet werden, das Schaltorgan zu betätigen. Die Anordnung ist derart, daß nur bei einem erkannten Hänger die Fehlererkennungsschaltung überhaupt das Schaltorgan betätigen kann. Auf diese Weise werden unnötige Schaltvorgänge des Schaltorganes verhindert und andererseits wird die Batterie des Zugfahrzeuges entlastet.

Weitere Vorteile ergeben sich aus der Beschreibung und der beigefügten Zeichnung.

Es versteht sich, daß die vorstehend genannten und die nachstehend noch zu erläuternden Mermale nicht nur in der jeweils angegebenen Kombination, sondern auch in anderen Kombinationen und in Alleinstellung verwendbar sind, ohne den Rahmen der vorstehenden Erfindung zu verlassen.

Die Erfindung ist in der Zeichnung dargestellt und wird in der nachfolgenden Beschreibung näher erläutert. Es zeigen:
- Fig. 1: in prinzipieller Darstellung die über eine erfindungsgemäße Schaltungsanordnung zusammengeschalteten Blinklichtanlagen eines Zugfahrzeuges und eines Hängers;
- Fig. 2: ein erstes Ausführungsbeispiel der Schaltungsanordnung aus Fig. 1;
- Fig. 3: ein zweites Ausführungsbeispiel der Schaltungsanordnung aus Fig. 1;
- Fig. 4: ein drittes Ausführungsbeispiel der Schaltungsanordnung aus Fig. 1;
- Fig. 5: ein viertes Ausführungsbeispiel der Schaltungsanordnung aus Fig. 1;
- Fig. 6: in einer Abwandlung der prinzipiellen Darstellung aus Fig. 1 ein fünftes Ausführungsbeispiel der neuen Schaltungsanordnung;
- Fig. 7: in einer Darstellung wie Fig. 6 ein sechstes Ausführungsbeispiel der Schaltungsanordnung;
- Fig. 8: die Fehlererkennungsschaltung aus Fig. 2, in einer detaillierteren Darstellung;
- Fig. 9: eine schematische Darstellung wie Fig. 1, wobei die Schaltungsanordnung eine Hängererkennungsschaltung umfaßt;
- Fig. 10: die Hängererkennungsschaltung nach Fig. 9, in einer detaillierteren Darstellung; und

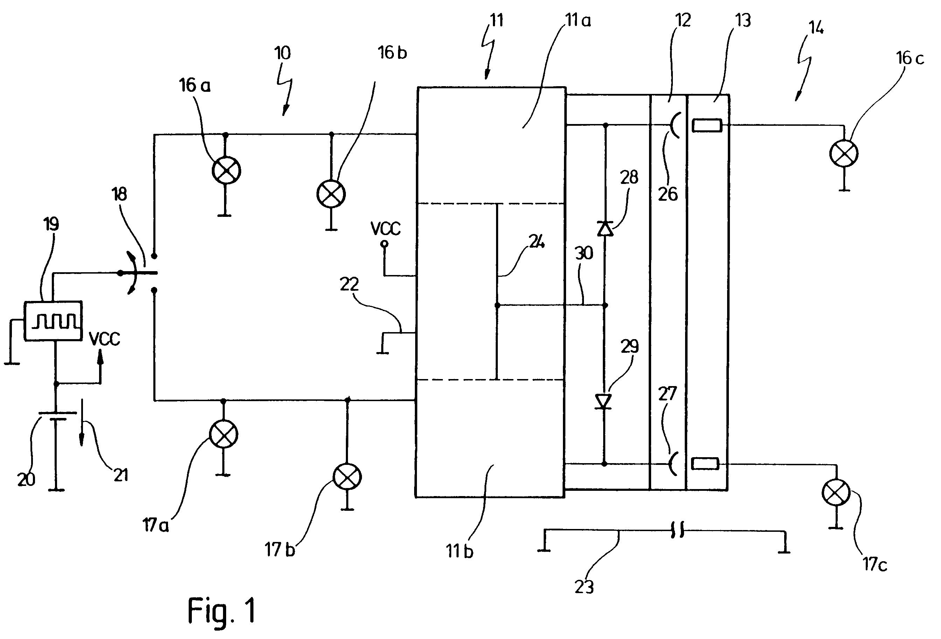

In Fig. 1 ist mit 10 eine elektrische Blinklichtanlage eines nicht näher dargestellten Zugfahrzeuges bezeichnet, die mit einer in das Zugfahrzeug eingebauten Schaltungsanordnung 11 verbunden ist. Die Schaltungsanordnung 11 weist eine Steckdose 12 auf, die einem Stecker 13 zugeordnet ist, über den eine elektrische Blinklichtanlage 14 eines ebenfalls nicht dargestellten Hängers mit der elektrischen Anlage des Zugfahrzeuges verbunden werden kann.

In Fig. 1 sind mit 16 und 17 einzelne Lampen der Blinklichtanlage 10 bzw. 14 bezeichnet. Die Lampen 16 sind die linken und die Lampen 17 die rechten Lampen der Blinklichtanlagen 10 bzw. 14. In dem gezeigten Ausführungsbeispiel bezeichnet 16a, 17a die vorderen Lampen der Blinklichtanlage des Zugfahrzeuges und 16b, 17b die hinteren Lampen der Blinklichtanlage des Zugfahrzeuges, während mit 16c und 17c die Lampen der Blinklichtanlage 14 des Hängers bezeichnet sind.

Wie üblich weist das Zugfahrzeug einen Fahrtrichtungsschalter 18 auf, der drei Stellungen einnehmen kann. Während er in der gezeigten Mittenstellung unwirksam ist, verbindet er in seinen anderen Stellungen einen Blinkgeber 19 mit den linken oder rechten Blinklichtern 16 bzw. 17.

Der Blinkgeber 19 ist mit einer Batterie 20 verbunden, die das Zugfahrzeug mit seiner Betriebsspannung 21 versorgt, die im weiteren auch mit VCC bezeichnet wird. Es ist zu erkennen, daß die Schaltungsanordnung 11 mit der Betriebspannung 21 verbunden ist und ebenfalls einen Masseanschluß 22 aufweist. Weiterhin ist zu erkennen, daß der Hänger über eine Masseleitung 23 mit der Masse des Zugfahrzeuges verbunden ist. In dem gezeigten Ausführungsbeispiel ist die Masseleitung 23 nicht über Steckdose 12 und Stecker 13 geführt.

Weiterhin ist in Fig. 1 gezeigt, daß die linken Lampen 16 der Blinklichtanlagen 10 und 14 mit einer Baugruppe 11a der Schaltungsanordnung 11 verbunden sind, während für die rechten Lampen 17 eine Baugruppe 11b vorgesehen ist. Die beiden Baugruppen 11a und 11b sind miteinander über eine Leitung 24 und mit Kontakten 26, 27 der Steckdose 12 über Dioden 28, 29 verbunden. Die Dioden 28 und 29 sind mit ihren Anoden zusammengeschaltet und hängen mit ihren Kathoden an den Kontakten 26 bzw. 27. Die Anoden der Dioden 28, 29 sind über eine Hängererkennungsleitung 30 mit der Leitung 24, die eine Meldeleitung 24 ist, verbunden, so daß sie in noch zu beschreibender Weise eine Hängererkennungsschaltung darstellt.

Bei gestecktem und elektrisch angeschlossenem Hänger, d.h. wenn der Stecker 13 in die Steckdose 12 gesteckt wurde, wie es in Fig. 1 dargestellt ist, erkennt die Schaltungsanordnung 11 dies über die Hängererkennungsleitung 30. Bei gestecktem Hänger sind nämlich die Kathoden der Dioden 28 und 29 über die Lampen 16c bzw. 17c mit Masse verbunden, so daß durch die Dioden 28, 29 ein Strom fließen kann. Wegen der Parallelschaltung der Dioden 28 und 29 halbiert sich der auf der Hängererkennungsleitung 30 fließende Strom, so daß jede der Lampen 16c, 17c nur die Hälfte des der Hängererkennungsleitung 30 fließenden Stromes führen muß.

Wenn eine der Lampen 16, 17 der Blinklichtanlage 10 des Zugfahrzeuges ausfällt, so erkennt der Blinkgeber 19 bei entsprechend betätigtem Fahrtrichtungsschalter 18 diesen Ausfall an der veränderten Stärke des fließenden Stromes. In diesem Falle erhöht sich in bekannter Weise die Blinkfrequenz, so daß der Fahrer des Zugfahrzeuges auf einer Kontrolleuchte im Wageninneren den Ausfall einer der Lampen 16, 17 seiner Blinklichtanlage 10 erkennt.

Bei gestecktem Stecker 13 fließt auf der Hängererkennungsleitung 30 ein Strom, der in noch näher zu beschreibender Weise ermöglicht, daß die Schaltungsanordnung 11 für einen veränderten Stromfluß in dem Blinkgeber 19 sorgt, wenn der Fahrtrichtungsschalter 18 betätigt wurde und die zugeordnete Lampe 16c bzw. 17c der Blinklichtanlage 14 des Hängers ausgefallen ist, wenn also z.B. ihr Glühfaden gebrochen ist.

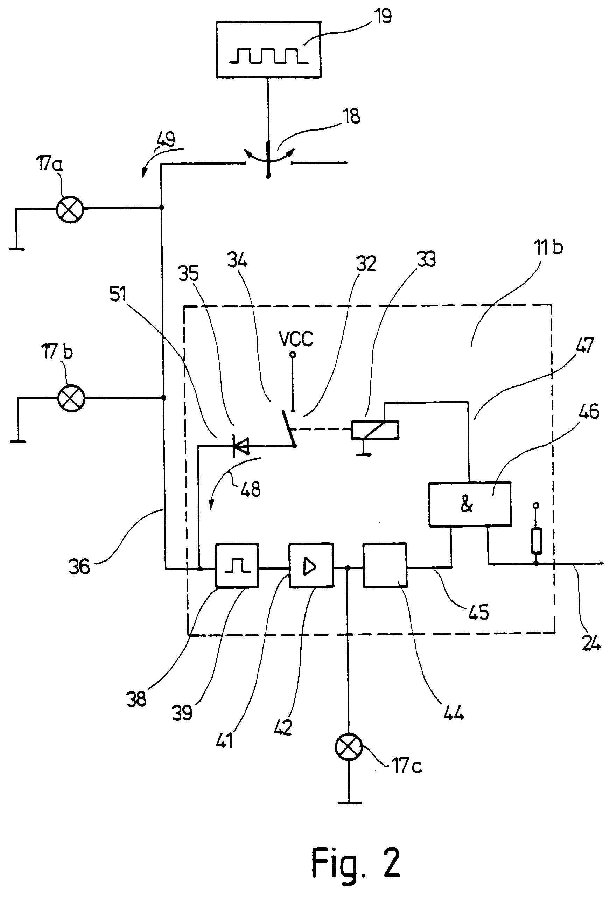

Wie dies geschieht, wird jetzt anhand von Fig. 2 erläutert, in der die den rechten Lampen 17 zugeordnete Baugruppe 11b detaillierter dargestellt ist. Die in gleicher Weise wie die Baugruppe 11b aufgebaute Baugruppe 11a ist in Fig. 2 der Übersicht halber nicht dargestellt.

Die Baugruppe 11b umfaßt ein Schaltorgan 32 in Form eines Relais 33 mit einem Schließkontaktpaar 34, das über eine als Strombegrenzer wirkende Diode 35 mit einer Anschlußleitung 36 verbunden ist, die aus der Baugruppe 11b herausführt. Es ist in Fig. 2 zu erkennen, daß die Anschlußleitung 36 mit den parallel geschalteten rechten Lampen 17a, 17b der Blinklichtanlage 10 des Zugfahrzeuges verbunden ist.

Die Anschlußleitung 36 ist andererseits mit einem Zeitschaltglied 38 verbunden, das in dem gezeigten Ausführungsbeispiel ein Monoflop 39 ist. Der Monoflop 39 ist an seinem Ausgang mit einem hochohmigen Eingang 41 einer Treiberschaltung 42 verbunden, die ihrerseits an ihrem Ausgang sowohl mit der rechten Lampe 17c der Blinklichtanlage 14 des Hängers als auch mit einer Fehlererkennungsschaltung 44 verbunden ist. Die Fehlererkennungsschaltung 44 ermittelt in noch näher zu beschreibender Weise, ob die Lampe 17c ausgefallen ist.

Die Fehlererkennungsschaltung 44 liefert an ihrer Ausgangsleitung 45 ein Signal, das in einem UND-Gatter 46 mit der Meldeleitung 24 verbunden ist. Das zuvor invertierte Signal auf der Meldeleitung 24 gibt an, ob tatsächlich ein Hänger elektrisch angeschlossen ist und das Signal am Ausgang der Fehlererkennungsschaltung 44 liefert eine Aussage darüber, ob die angesteuerte Lampe 17c ausgefallen ist. Sind beide Bedingungen erfüllt, so schaltet das UND-Gatter 46 über seine Ausgangsleitung 47 das Relais 33 durch und das Schließkontaktpaar 34 wird geschlossen. Ist dies geschehen, so wird von der Batteriespannung VCC über das Schließkontaktpaar 34 und die Strombegrenzerdiode 35 ein Fehlerstrom 48 in die Lampen 17a, 17b der Blinklichtanlage 10 des Zugfahrzeuges eingespeist. Dieser Fehlerstrom 48 überlagert sich einem bei 49 angedeuteten Betriebsstrom, der dem Blinkgeber 19 entnommen wird.

Da die Lampen 17a und 17b annähernd gleiche Durchgangswiderstände haben und andererseits die Strombegrenzerdiode 35 eine Widerstandsstrecke 51 darstellt, wie sie auch in dem Blinkgeber 19 zu finden ist, halbieren sich sowohl der Fehlerstrom 48 als auch der Betriebsstrom 49 und fließen je zur Hälfte durch die Lampen 17a und 17b.

Da die Baugruppe 11b bei Ausfall der Lampe 17c in einen Schaltzustand gerät, in dem sozusagen aus zwei parallelen Spannungsquellen, nämlich einmal aus dem Blinkgeber 19 und einmal über die Strombegrenzerdiode 35 aus der Betriebsspannung VCC, Strom in die Lampen 17a und 17b eingespeist wird, bleibt der insgesamt durch diese Lampen 17a, 17b fließende Strom konstant, wird jedoch je etwa zur Hälfte von dem Betriebsstrom 49 und dem Fehlerstrom 48 getragen. Anders ausgedrückt, der aus dem Blinkgeber 19 stammende Betriebsstrom 49 hat etwa die Größe des Fehlerstromes 48 und ist somit gegenüber dem fehlerfreien Betrieb der Blinklampe 17c etwa halbiert.

Dem Blinkgeber 19 wird sozusagen eine reduzierte Stromaufnahme der Blinklichtanlage 10 des Zugfahrzeuges simuliert, was bewirkt, daß der Blinkgeber einen Fehlerzustand annimmt und mit doppelter Blinkfrequenz arbeitet.

Im fehlerfreien Betrieb liefert der Blinkgeber 19 einen Betriebsstrom 49, der die Lampen 17a und 17b versorgt. Über die Anschlußleitung 36 wird bei jedem Takt des Blinkgebers 19 der Monoflop 39 getriggert und schaltet die Treiberschaltung 42 ein, so daß auch die Blinklampe 17c der Blinklichtanlage 14 des Hängers im Takt mit den Lampen 17a und 17b blinkt. Die Impulsdauer des Monoflop 39 entspricht dabei in etwa der Impulsdauer des Blinkgebers 19.

Bei Ausfall der Lampe 17c wird dies - wie oben beschrieben - von der Fehlererkennungsschaltung 44 erkannt, die über das UND-Gatter 46 das Relais 33 schaltet. Ohne den Monoflop 39 würde das Relais 33 jetzt in eine Art Selbsthaltefunktion übergehen, denn über den Fehlerstrom 48 würde die Treiberschaltung 42 ständig angesteuert, so daß die Fehlererkennungsschaltung 44 ein permanentes Fehlersignal ausgeben würde. Dies wiederum würde dazu führen, daß das UND-Gatter 46 das Relais 33 ständig geschlossen hielte. Der Fehlerstrom 48 und die Treiberschaltung 42 sind jedoch über das Monoflop 39 sozusagen entkoppelt, da das Monoflop 39 unabhängig von dem Vorliegen eines Fehlerstromes 48 nach seiner festgelegten Taktdauer zurückspringt und die Ansteuerung der Treiberschaltung 42 zurücknimmt. Ist dies geschehen, fällt das UND-Gatter in seinen entgegengesetzten Betriebszustand und das Relais 33 öffnet das Schließkontaktpaar 34 wieder.

Zusammengefaßt läßt sich sagen, daß beim Ausfall einer angesteuerten Lampe 17c der Blinklichtanlage 14 des Hängers in die Blinklichtanlage 10 des Zugfahrzeuges ein Fehlerstrom 48 eingespeist wird, der sich dem vom Blinkgeber 19 gelieferten Betriebsstrom 49 derart überlagert, daß in den Lampen 17a und 17b weiterhin ein Strom gleicher Stärke fließt, wodurch sich der Betriebsstrom 49 gegenüber dem fehlerfreien Betrieb halbiert, was der Blinkgeber 19 als Fehlerzustand erkennt und meldet.

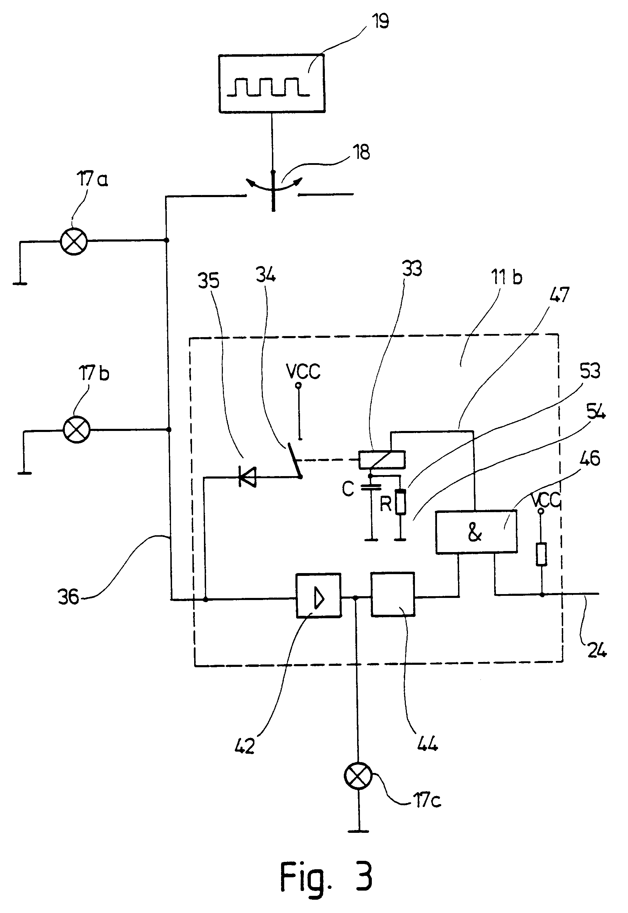

In der in Fig. 3 gezeigten Ausführung der Baugruppe 11b ist insofern eine Abweichung gegenüber der Baugruppe 11b aus Fig. 2 vorhanden, als einerseits zwischen der Anschlußleitung 36 und der Treiberschaltung 42 kein Zeitschaltglied (38 in Fig. 2) mehr vorgesehen ist und andererseits das Relais 33 über eine Verzögerungsschaltung 53 mit Masse verbunden ist. In dem gezeigten Ausführungsbeispiel ist die Verzögerungsschaltung 53 ein RC-Glied 54 aus einem Kondensator C und einem dazu parallel geschalteten Widerstand R. Wird jetzt im Fehlerfalle über die Ausgangsleitung 47 der UND-Schaltung 46 das Relais 33 eingeschaltet, so lädt sich der Kondensator C allmählich auf und nach einer durch den Kapazitätswert des Kondensators C und den Längswiderstand der Spule des Relais 33 bestimmten Zeitkonstante T = RC erreicht der Kondensator C einen so großen Spannungswert, daß das Relais 33 wieder abfällt. Die Zeitkonstante T ist entsprechend der Taktzeit des Blinkgebers 19 gewählt, so daß bei Ausfall der Lampe 17c das Relais 33 etwa dann wieder abfällt, wenn der Blinkgeber 19 in seinen Aus-Takt schaltet. Durch die Verzögerungsschaltung 53 ist in dem in Fig. 3 gezeigten Ausführungsbeispiel sichergestellt, daß das Relais 33 nicht in eine Selbsthaltefunktion gerät.

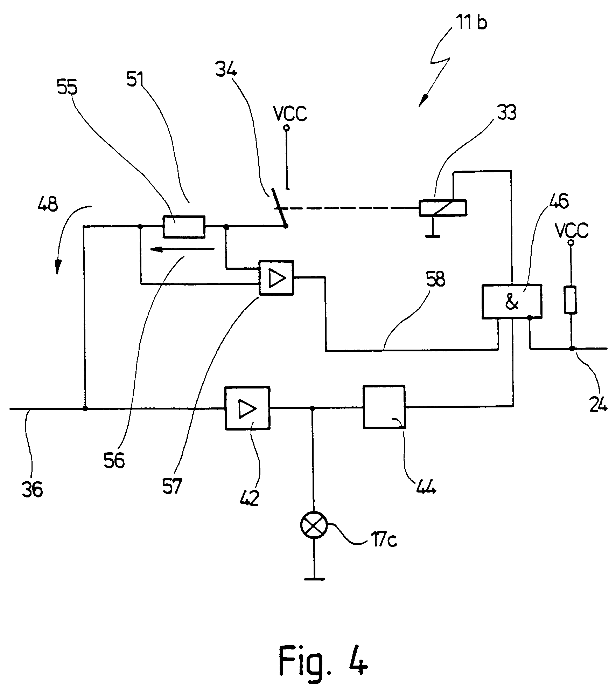

Die in Fig. 4 gezeigte Baugruppe 11b unterscheidet sich von der in Fig. 3 gezeigten insofern, als statt der Strombegrenzerdiode (35 in Fig. 3) hier ein Shunt-Widerstand 55 vorgesehen ist, welcher die Widerstandsstrecke 51 bildet. Bei Ausfall der Lampe 17c verursacht der Fehlerstrom 48 über dem Shunt-Widerstand 55 einen Spannungsabfall 56 der in einer nachgeschalteten Meßschaltung 57 erfaßt wird. Die Meßschaltung 57 führt mit ihrer Ausgangsleitung 58 ebenfalls zu dem UND-Gatter 46.

Fließt jetzt bei Ausfall der Lampe 17c ein Fehlerstrom 48, so wird dies von der Meßschaltung 57 erfaßt. Am Ende der Taktzeit des Blinkgebers 19 fällt der Betriebsstrom (49 in Fig. 2) aus dem Blinkgeber 19 weg, so daß der gesamte von den Lampen 17a und 17b aufgenommene Strom nunmehr durch den Fehlerstrom 48 geliefert wird, der folglich seinen Wert ungefähr verdoppelt.

Dieser Anstieg der Stromstärke wird über den Shunt-Widerstand 55 in einen Anstieg des Spannungsabfalles 56 umgewandelt und von der Meßschaltung 57 erfaßt. Über ihre Ausgangsleitung 58 verriegelt die Meßschaltung 57 jetzt das UND-Gatter 46, so daß das Relais 33 wieder abfällt. Da bei dem in Fig. 4 gezeigten Ausführungsbeispiel über die Meßschaltung 57 überprüft wird, wann der Blinkgeber 19 seine Taktzeit beendet, kann in der Baugruppe 11b sowohl auf die Verzögerungsschaltung 53 als auch auf das Zeitschaltglied 38 verzichtet werden.

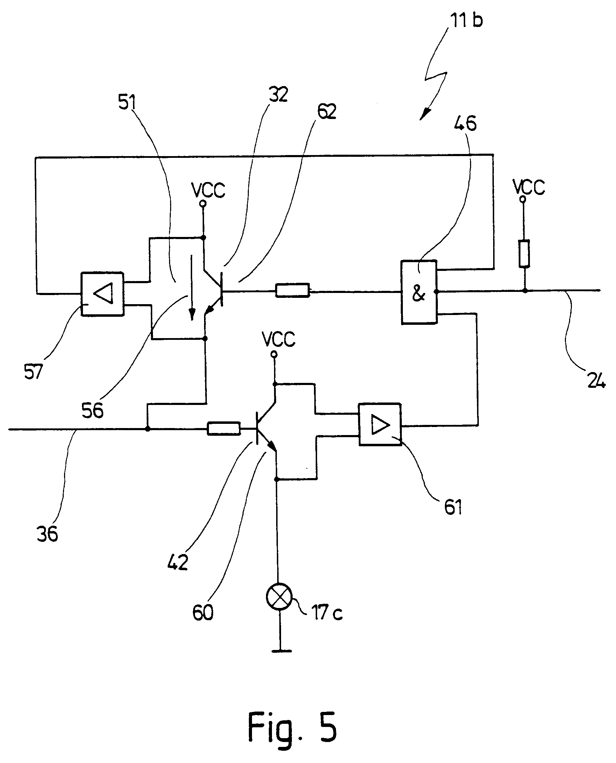

In dem in Fig. 5 gezeigten vierten Ausführungsbeispiel der Baugruppe 11b ist die Treiberschaltung 42 durch einen Transistor 60 realisiert, dessen Kollektor-Emitterspannung über eine Meßschaltung 61 erfaßt wird. Weiter ist zu erkennen, daß als Schaltorgan 32 ein Halbleiterschalter 62 vorgesehen ist, dessen Kollektor-Emitter-Spannung von der bereits aus Fig. 4 bekannten Meßschaltung 57 überwacht wird. Der Halbleiterschalter 32 wirkt somit gleichzeitig als Widerstandsstrecke 51. Die Funktionsweise der Schaltung aus Fig. 5 entspricht ansonsten der Funktionweise der Schaltung aus Fig. 4.

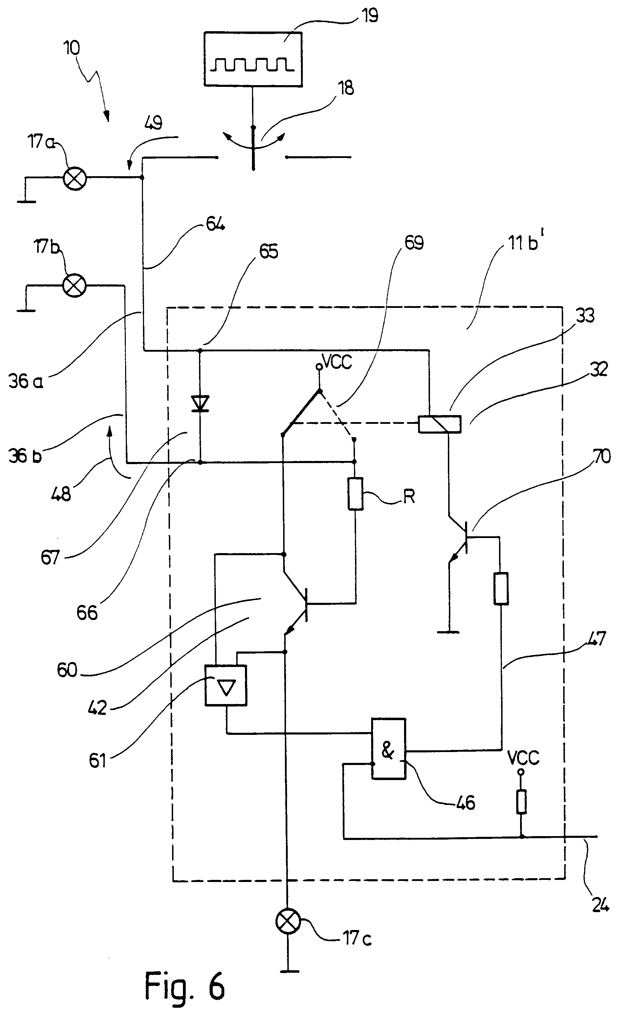

In Fig. 6 ist in einer Darstellung wie Fig. 2 schematisch die Zusammenschaltung einer weiteren Baugruppe 11b' mit der "rechten Seite" der Blinklichtanlage 10 eines Zugfahrzeuges dargestellt. Es ist zu erkennen, daß die Verbindung zwischen den Lampen 17a und 17b, die einen Strompfad 64 darstellt, aufgetrennt ist und die Baugruppe 11b' über eine Anschlußleitung 36a mit dem Blinkgeber 19 und der vorderen Lampe 17a sowie über eine Anschlußleitung 36b mit der hinteren Lampe 17b verbunden ist. Zwischen die Anschlußleitungen 36a und 36b ist mit ihrer Anodenseite 65 und ihrer Kathodenseite 66 eine Diode 67 geschaltet. Als Schaltorgan ist wieder ein Relais 33 vorgesehen, das diesmal einen Umschaltkontakt 69 aufweist, und mit seiner Spule zwischen die Anodenseite 65 der Diode 67 und einen Halbleiterschalter 70 geschaltet ist. Als Treiberschaltung 42 ist der schon aus Fig. 5 bekannte Transistor 60 vorgesehen, dessen Kollektor-Emitter-Spannung mittels der Meßschaltung oder Fehlererkennungsschaltung 61 überwacht wird. An seinen Emitter ist der Transistor 60 in schon beschriebener Weise mit der Lampe 17c verbunden, die somit abgekoppelt von der Blinklichtanlage 10 über die Treiberschaltung 42 betrieben wird.

Im fehlerfreien Betrieb befindet sich der Umschaltkontakt 69 in dem in Fig. 6 gezeigten Zustand, in dem er die Betriebsspannung VCC mit dem Kollektor des Schalttransistors 60 verbindet. Da die Basis des Transistors 60 über einen Widerstand R und die Diode 67 mit dem Blinkgeber 19 verbunden ist, folgt der Strom durch den Transistor 60 den Signalen des Blinkgebers 19, so daß die Lampe 17c zusammen und im Takt mit den Lampen 17a und 17b blinkt.

Fällt die Lampe 17c aus, so fließt kein Strom mehr durch den Transistor 60, was von der Meßschaltung 61 erkannt und an das UND-Gatter 46 weitergegeben wird. In diesem Falle schaltet das UND-Gatter 46 über seine Ausgangsleitung 47 den Halbleiterschalter 70 durch und das Relais 33 zieht an. Der dazu erforderliche Strom wird ebenfalls aus dem Blinkgeber 19 geliefert, er beträgt jedoch weniger als 10 % des üblicherweise von dem Blinkgeber 19 abgegebenen Betriebsstromes, so daß die Funktionsweise des Blinkgebers 19 nicht gestört bzw. beeinträchtigt wird. Durch das Umschalten des Relais 33 ist die Betriebsspannung VCC jetzt unmittelbar mit der Kathodenseite 66 der Diode 67 und damit mit der hinteren Lampe 17b der Blinklichtanlage 10 des Zugfahrzeuges verbunden. Wegen der Polung der Diode 67 fließt der Fehlerstrom 48 in die Lampe 17b, während der Betriebsstrom 49 aus dem Blinkgeber 19 überwiegend in die Lampe 17a und nur zu geringem Teil über die Diode 67 in die Lampe 17b fließt. Da der von der Lampe 17b aufgenommene Strom zum größten Teil durch den Fehlerstrom 48 dargestellt wird, geht der von dem Blinkgeber 19 gelieferte Betriebsstrom 49 zurück und der Blinkgeber erkennt einen Fehlerfall und signalisiert dies durch erhöhte Blinkfrequenz.

Am Ende der Taktzeit des Blinkgebers 19 fällt dieser in seinen Aus-Zustand, so daß kein weiterer Betriebsstrom 49 geliefert wird. Wegen der Polung der Diode 67 kann der Fehlerstrom 48 nicht dazu beitragen, daß das Relais 33 angezogen bleibt, dieses fällt also zusammen mit dem Takt des Blinkgebers 19 ab. Damit schaltet auch der Umschaltkontakt 69 in seine in Fig. 6 gezeigte Ruhelage zurück, so daß auch der Fehlerstrom 48 abgeschaltet wird.

Ohne die Diode 67, d.h. wenn die Anschlußleitung 36a und 36b unmittelbar miteinander verbunden wären, würde sich das Relais 33 in einem Selbsthaltezustand befinden, denn über den geschalteten Umschaltkontakt 69 - gestrichelte Stellung in Fig. 6 - würde aus der Betriebsspannung VCC unmittelbar der Betriebsstrom für das Relais 33 geliefert werden. Da die Meßschaltung 61 weiterhin den Fehlerzustand der Lampe 17c erkennt, liefert das UND-Gatter 46 ein Ausgangssignal auf seine Ausgangsleitung 47 und hält den Halbleiterschalter 70 durchgeschaltet. Andererseits würde der jetzt immer noch fließende Fehlerstrom 48 nicht nur das Relais 33 geschaltet halten, sondern ebenfalls die Lampen 17a und 17b mit Strom versorgen. Dieser Dauerbetrieb würde sich ebenfalls auf der Kontrolleuchte in dem Fahrzeuginneren bemerkbar machen, so daß auch ohne die Diode 67 (überbrückt) eine Erfassung der Fehlfunktion der Lampe 17c möglich ist. Gemäß der entsprechenden Norm ist es nämlich auch zulässig, den Ausfall der Blinklichtanlage durch ein Dauersignal anzuzeigen. Bei defekter Hängerlampe würde also Dauerlicht und bei defekter Zugfahrzeuglampe schnelleres Blinken den Fehler anzeigen. Durch die Diode 67 jedoch wird die Selbsthaltefunktion des Relais 33 verhindert, und die Störungsanzeige erfolgt in jedem Fehlerfall wie in üblicher Weise über eine schneller blinkende Kontrolleuchte im Fahrzeuginneren.

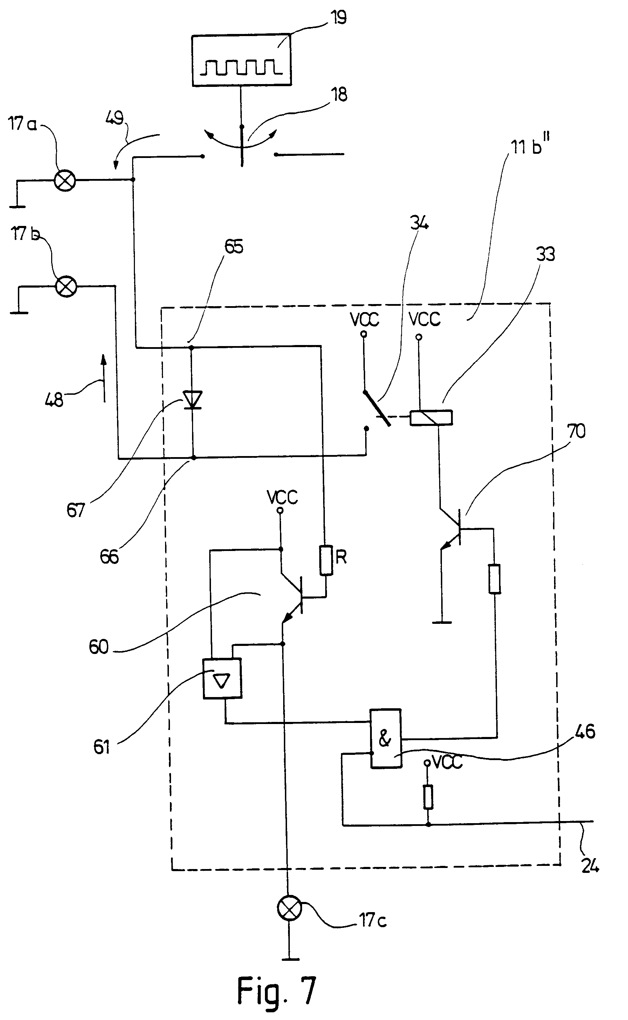

In Fig. 7 ist eine Abwandlung der Baugruppe 11b' mit 11b'' bezeichnet und in einer entsprechenden Darstellung wie Fig. 6 gezeigt.

In Fig. 7 ist zu erkennen, daß die Spule des Relais 33 hier unmittelbar mit VCC verbunden ist und daß das Relais 33 wieder einen Schließkontakt 34 aufweist, über den die Betriebsspannung VCC mit der Kathodenseite 66 der Diode 67 verbindbar ist. Die Anodenseite 65 der Diode 67 ist über den Widerstand R mit der Basis des Transistors 60 verbunden, dessen Kollektor hier immer auf VCC gelegt ist. Ansonsten entspricht die Baugruppe 11b'' in ihrer Beschaltung der Baugruppe 11b' aus Fig. 6.

Im Normalbetrieb werden die Signale des Blinkgebers 19 von dem Transistor 60 hochohmig abgegriffen und zur Ansteuerung der Lampe 17c umgesetzt. Der Stromfluß durch den Transistor 60 wird wieder von der Meßschaltung 61 überwacht, deren Ausgang über die UND-Schaltung 46 logisch mit der invertierten Meldeleitung 24 verbunden ist, die angibt, ob ein Hänger angeschaltet ist. Erkennt die Fehlerkennungsschaltung 61 einen Ausfall der Lampe 17c und ist gleichzeitig ein Hänger eingeschaltet (Signal L auf Meldeleitung 24) so wird der Transistor 70 durchgeschaltet und über das nun geschlossene Schließkontaktpaar 34 gelangt ein Fehlerstrom 48 in die hintere Lampe 17b der Blinklichtanlage 10 des Zugfahrzeuges. Wie schon anhand von Fig. 6 beschrieben, geht jetzt der aus dem Blinkgeber 19 stammende Betriebsstrom 49 etwa auf seinen halben Wert zurück, so daß der Blinkgeber 19 einen Fehlerzustand erkennt.

In schon beschriebener Weise verhindert die Diode 67 eine Selbsthaltefunktion des Relais 33: Wenn der Blinkgeber 19 den Betriebsstrom 49 ausschaltet, schließt der Transistor 60 und das Fehlersignal der Fehlererkennungsschaltung 61 wird zurückgenommen, so daß über das UND-Gatter 46 der Transistor 70 gesperrt wird, was nun wiederum dazu führt, daß das Schließkontakt 34 öffnet und auch der Fehlerstrom 48 abgeschaltet wird.

Es sei noch erwähnt, daß bei den insoweit anhand der Fig. 2 bis 7 beschriebenen Baugruppen 11b, 11b', 11b'' selbstverständlich die Erkennung eines Fehlers in den Lampen 17a und 17b weiterhin unmittelbar von dem Blinkgeber 19 selbst vorgenommen wird. In diesem Falle wird über die jeweilige Treiberschaltung 42 die Lampe 17c weiter betrieben, während eine der beiden Lampen 17a und 17b ausfällt, was ebenfalls zu einer Reduzierung des Betriebsstromes 49 führt, so daß auch hier der Blinkgeber 19 in seine erhöhte Blinkfrequenz zur Fehleranzeige umschaltet.

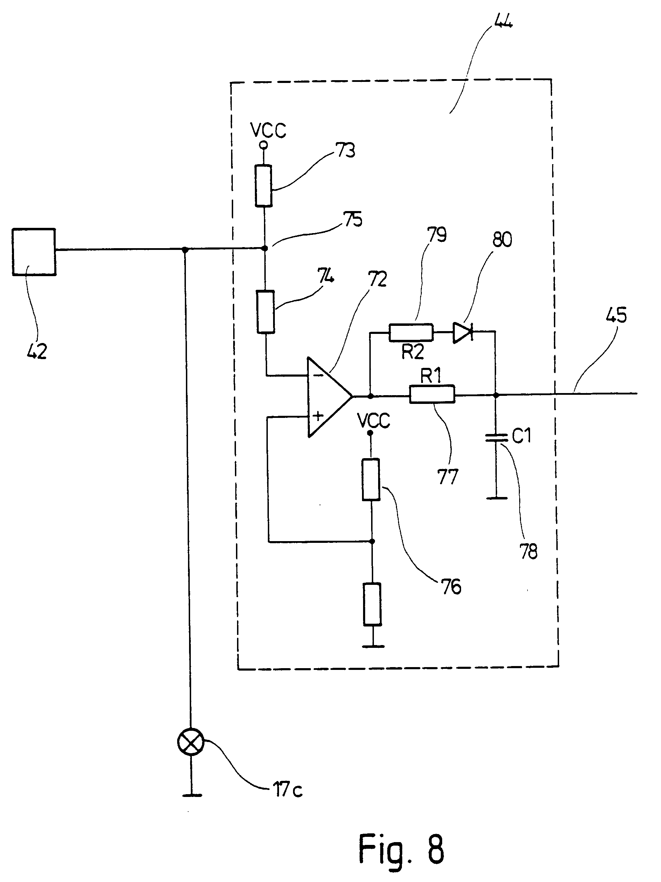

Während die Meßschaltung 61, die ebenfalls als Fehlererkennungsschaltung arbeitet, lediglich den Spannungsabfall über der Kollektor-Emitter-Strecke des Transistors 60 ermittelt und daraus bestimmt, ob eine angeschlossene Lampe 17c ausgefallen ist, mißt die in den Fig. 2 bis 4 zu erkennende Fehlererkennungsschaltung 44 unmittelbar den Spannungsabfall bei einer Lampe 17c. Wie dies geschieht, wird jetzt anhand von Fig. 8 beschrieben.

Die Fehlererkennungsschaltung 44 weist einen Operationsverstärker 72 auf, dessen invertierender Eingang über eine Reihenschaltung auf zwei Widerständen 73 und 74 auf VCC gelegt ist. Über ihren Mittenabgriff 75 sind die beiden Widerstände 73, 74 mit dem Ausgang der Treiberschaltung 42 und der Lampe 17c verbunden.

Der nicht-intervertierende Eingang des Operationsverstärkers 72 ist mit dem Mittenabgriff eines Spannungsteilers 76 verbunden, der den nicht-intervertierenden Eingang mit einer Referenzspannung versorgt, die deutlich geringer ist als VCC. In dem gezeigten Beispiel ist die Referenzspannung ca. ein Viertel von VCC.

Der Operationsverstärker 72 weist an seinem Ausgang einen mit 77 bezeichneten Längswidestand R1 auf, an den sich ein mit 78 bezeichneter Kondensator C1 anschließt, der mit seinem zweiten Bein auf Masse liegt. Parallel zu dem Widerstand R1 liegt eine Reihenschaltung aus einem mit 79 bezeichneten zweiten Widerstand R2 und einer Diode 80, die mit ihrer Anode mit dem Widerstand R2 verbunden ist. Die Anordnung ist derart, daß der Kondensator C1 über die Parallelschaltung von R1 und R2 geladen wird, während er lediglich über den Widerstand R1 entladen wird. Da der Widerstand R2 sehr viel kleiner ist als der Widerstand R1, erfolgt das Laden des Kondensators C1 in erheblich kürzerer Zeit als das Entladen. Der Kondensator C2 wirkt somit wie ein Integrierglied, das kurzfristige, auch periodische Änderungen am Ausgang des Operationsverstärkers 72 kompensiert.

An dem invertierenden Eingang des Operationsverstärkers 72 können nun drei verschiedene Betriebszustände eintreten:

Im ersten Fall ist die Lampe 17c in Ordnung aber nicht angesteuert. Hier wird der Mittenabgriff 75 durch die Lampe 17c auf Masse gezogen, so daß das Potential des invertierenden Einganges unterhalb des Potentials des nicht-intervertierenden Einganges des Operationsverstärkers 72 gelangt, der Ausgang des Operationsverstärkers 72 geht also auf logisch H, der Kondensator C1 wird aufgeladen und die Ausgangsleitung 45, die zu dem UND-Gatter 46 führt, geht ebenfalls auf H.

Im zweiten Falle ist die Lampe 17c ebenfalls in Ordnung, wird jedoch periodisch von dem Blinkgeber 19 über die Treiberschaltung 42 mit Strom versorgt. Das Taktverhältnis der Ein- und Auszeiten des Blinkgebers 19 ist ungefähr 1:1, so daß der Mittenabgriff 75 für gleiche Zeitdauern auf logisch L und auf logisch H geschaltet ist. Auch der Ausgang des Operationsverstärkers 72 geht jetzt abwechselnd auf logisch H und auf logisch L, da das Aufladen des Kondensators C1 jedoch erheblich schneller geht als das Entladen, bleibt das Signal auf der Ausgangsleitung 45 auf logisch H.

Im dritten Fall ist entweder die Lampe 17c defekt oder aber es ist gar keine Lampe 17c vorhanden. In diesem Falle bleibt der Mittenabgriff 75 immer auf logisch H, so daß sich wegen des nun auf logisch L liegenden Ausganges des Operationsverstärkers 72 der Kondensator C1 entlädt und schließlich die Ausgangsleitung 45 auf logisch L zieht.

Wie bereits erwähnt, führt dies bei einem Leerlaufzustand der Lampe 17c dazu, daß ein Fehlerstrom 48 in die Blinklichtanlage 10 des Zugfahrzeuges eingespeist wird und somit den Blinkgeber 19 einen "simulierten" Fehlerzustand erkennen läßt.

Ist jedoch gar kein Hänger gesteckt, hat also die Fehlererkennungsschaltung 44 nicht einen Leerlaufzustand, sondern das völlige Fehlen einer Lampe 17c erkannt, so wird wegen des fehlenden Meldesignales auf der Leitung 24 über das UND-Gatter 46 verhindert, daß die Ausgangsleitung 47 das jeweils nachgeschaltete Schaltorgan 32 schaltet.

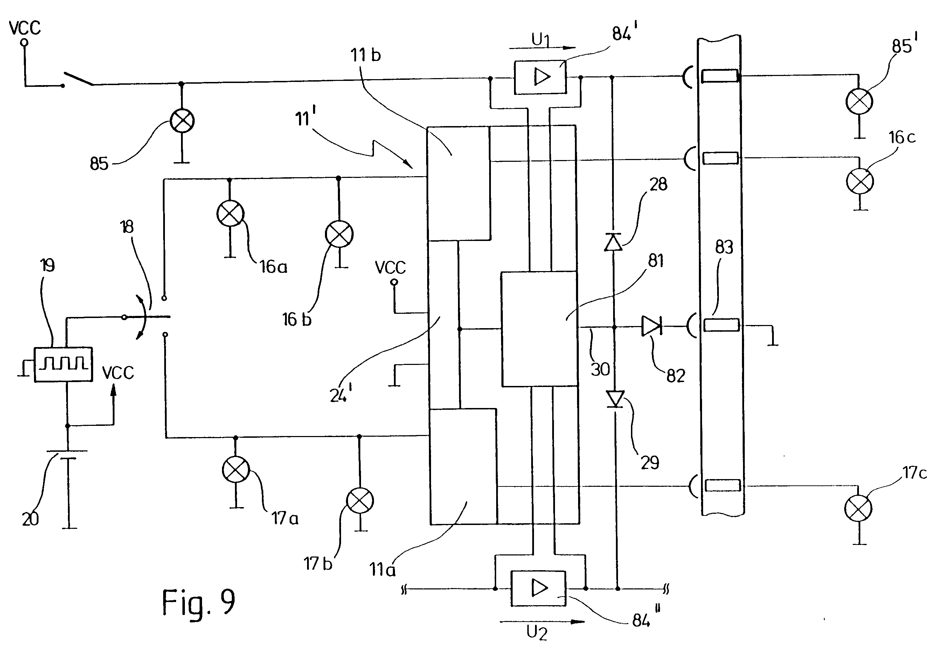

In Fig. 9 ist in einer Darstellung wie Fig. 1 eine weitere erfindungsgemäße Schaltungsanordnung 11' dargestellt, die neben den schon beschriebenen Baugruppen 11a und 11b eine Hängererkennungsschaltung 81 aufweist, die zwischen die Hängererkennungsleitung 30 und die Meldeleitung 24' geschaltet ist. Es ist zu erkennen, daß die Hängererkennungsleitung 30 mit einer weiteren Diode 82 verbunden ist, die unmittelbar mit einem Hängererkennungskontakt 83 verbunden ist, wie er nach der Vornorm DIN 72570 bei einem 13-poligen Stecker als Anhängererkennung vorgesehen ist.

Weiterhin ist die Hängererkennungsschaltung 81 mit Treiberschaltungen 84 einer Interface-Schaltung verbunden, über die von bei 85 angedeuteten Lampen der Beleuchtungsanlage des Zugfahrzeuges hochohmig Signalspannungen abgegriffen und zum Treiben der entsprechenden Beleuchtungslampe 85' einer Beleuchtungsanlage des Hängers vorgesehen sind. Diese Lampen 85 und 85' können beispielsweise die Bremslichter, die Rücklichter oder die Rückfahrleuchte darstellen. Durch das hochohmige Abgreifen von Signalspannungen von den Lampen 85 wird im Falle eines Kurzschlusses auf der Hängerseite verhindert, daß die elektrische Anlage des Zugfahrzeuges vollständig ausfällt.

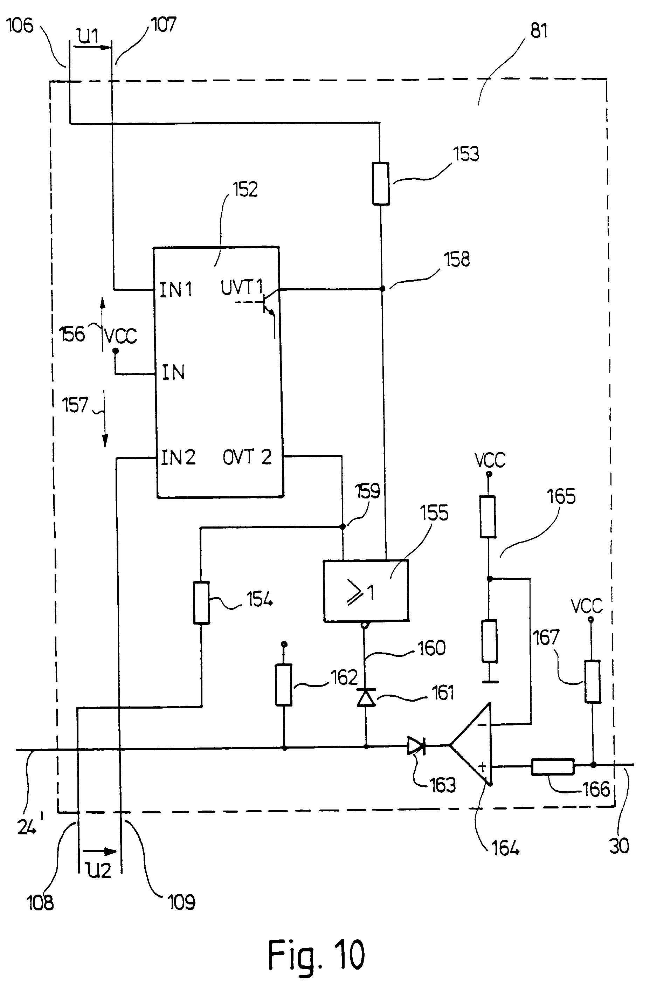

Es ist zu erkennen, daß die Hängererkennungsschaltung 81 die Spannungsabfälle U1 und U2 über den Treiberschaltungen 84' und 84'' abgreift. Anhand der Spannungsabfälle U1, U2 über den Treiberschaltungen 84', 84'' erkennt die Hängererkennungsschaltung 81, ob durch die zugeordneten Lampen 85' ein Strom fließt. Selbst wenn die Hängererkennungsleitung 30 also nicht auf Masse bezogen ist, wodurch normalerweise ein Hänger erkannt wird, kann die Hängererkennungsschaltung 81 anhand der Spannungsabfälle U1, U2 einen Hänger erkennen. Wie dies geschieht, wird jetzt anhand von Fig. 10 beschrieben.

Die Hängererkennungsschaltung 81 weist zunächst eine Komparatorschaltung 152 auf, wie sie beispielsweise unter der Typenbezeichnung U479B und U4790 im Handel erhältlich ist. Über Meßleitungen 107 und 109 sind Ausgänge der Treiberschaltungen 84' und 84'' mit Eingängen IN1 und IN2 der Komparatorschaltung 152 verbunden. Die mit den Eingängen der Treiberschaltungen 84', 84'' verbundenen Meßleitungen 106 und 108 führen über Längswiderstände 153 und 154 zu den zugeordneten Ausgängen OUT1 und OUT2 der Komparatorschaltung 152. Die am Ausgang der jeweiligen Treiberschaltung 84', 84'' anstehende Spannung wird über den Eingang IN mit VCC verglichen. Die so zwischen VCC und den Ausgängen der Treiberschaltungen 84', 84'' gebildeten Differenzen sind bei 146 und 147 durch Pfeile angedeutet.

Die innere Beschaltung der Komparatorschaltung 152 ist derart, daß die Ausgänge OUT1 und OUT2, die Open-Kollektor-Ausgänge sind, nur dann sperren, wenn die Spannungen 156, 157 größer als 8mV sind. In all den anderen Fällen ist der Ausgangstransistor bei OUT1 und OUT2 durchgeschaltet, so daß die Ausgänge OUT1 und OUT2 auf logisch L liegen.

Im folgenden wird die Funktionsweise anhand der Fig. 9 und 10 weiter erläutert. Liegt an der Lampe 85 eine Steuerspannung an, so gelangt diese über die Meßleitung 106 und den Längswiderstand 152 in den Ausgang OUT1 hinein. Ist an den Ausgang der Treiberschaltung 84' eine Lampe 85' des Hängers angeschlossen, so fällt über der Treiberschaltung 84' eine Spannung U1 ab, was dazu führt, daß die Spannung 156 den Ausgangtransistor des Ausganges OUT 1 sperrt, so daß der Ausgang OUT1 auf logisch H geht. Ist keine Lampe 85' angeschlossen oder wird die Lampe 85 nicht angesteuert, so bleibt der Ausgang OUT1 auf logisch L. Entsprechendes gilt für Eingang IN2 und Ausgang OUT2. Die beiden Ausgänge OUT1 und OUT2 sind über ihre Verbindungspunkte 158 und 159 mit den Längswiderständen 153 und 154 mit Eingängen eines NUR-Gatters 155 verbunden.

Aufgrund des soeben erklärten ergibt sich, daß das NOR-Gatter 155 an seinem Ausgang 160 logisch L-Potential führt, wenn zumindest über der Treiberschaltung 84' oder über der Treiberschaltung 84'' eine Spannung U1 bzw. U2 abfällt. An dem Ausgang 160 ist also zu erkennen, ob Lampen 85' von Strom durchflossen sind. Immer dann, wenn zumindest eine Lampe stromdurchflossen ist, ist der Ausgang 160 auf logisch L.

Der Ausgang 160 ist über eine Diode 161 mit der Leitung 24' verbunden, wobei die Diode 161 mit ihrer Anode an die Meldeleitung 24' angeschaltet ist. Über einen Widerstand 162 ist die Leitung 24' ebenfalls mit VCC verbunden, so daß die Leitung 24' nur dann L-Potential führt, wenn beispielsweise der Ausgang 160 auf logisch L ist, wenn also über den Betriebsstrom eine Hängerlampe ein angeschlossener Hänger erkannt wurde.

Fließt jedoch durch keine der Lampen 85' ein Strom, so geht der Ausgang 160 auf logisch H. Um dennoch den angeschlossenen Hänger erkennen zu können, ist über eine weitere Diode 163, die mit ihrer Anode mit der Anode der Diode 161 zusammengeschaltet ist, ein weiterer Operationsverstärker 164 angeschlossen, dessen Ausgang mit der Kathode der Diode 163 verbunden ist. Der invertierende Eingang des Operationsverstärkers 164 wird über einen Spannungsteiler 165 mit einer Spannung versorgt, die deutlich geringer ist als VCC. Der nicht-intervertierende Eingang ist über einen Längswiderstand 166 und einen PULL-UP-Widerstand 167 mit VCC verbunden. Auf den gemeinsamen Verbindungspunkt der Widerstände 166 und 167 führt die Hängererkennungsleitung 30, die immer dann auf logisch L geschaltet ist, wenn ein Hänger eingeschaltet ist. In einem solchen Falle geht der Ausgang des Operationsverstärkers 164 ebenfalls auf logisch L, was über die Diode 163 auf die Leitung 24 weitergegeben wird.

Ist jedoch kein Hänger eingeschaltet, so ist die Hängererkennungsschaltung 30 wegen des PULL-UP-Widerstandes 167 auf logisch H und über den Operationsverstärker 164 und die Diode 163 nimmt wegen des weiteren PULL-UP-Widerstandes 162 die Meldeleitung 24' ebenfalls den Wert logisch H an. In einem solchen Fall kann nämlich auch der Ausgang 160 des NUN-Gatters 155 nicht auf logisch L gehen, denn wegen der fehlenden Lampen 85' kann es nicht zu einem Spannungsabfall U1 bzw. U2 kommen.

Die Beschaltung mit dem Komparator 152 ermöglicht es nun, auch dann sicher einen Hänger zu erkennen, wenn sämtliche über Dioden 28, 29 abgefragten Lampen 85' des Hängers mit Strom beaufschlagt sind. In diesem Falle führt die Hängererkennungsleitung 30 nämlich H-Potential, wenn kein weiterer Hängererkennungskontakt 83 vorgesehen sein sollte. In diesem Falle sperrt die Diode 163, aber wegen der Spannungsabfälle U1 und U2 geht der Ausgang 160 des NOR-Gatters 155 auf logisch L, was über die Leitung 24' an das UND-Gatter 46 aus den Fig. 2 bis 8 weitergegeben wird.

Durch das Zusammenwirken der soeben beschriebenen Hängererkennungsschaltung 81 und der anhand von Fig. 8 beschriebenen Fehlererkennungsschaltung 44 ist sichergestellt, daß das jeweilige UND-Gatter 46 an seiner Ausgangsleitung 47 nur dann auf H-Potential geht, wenn sowohl ein Hänger elektrisch angeschlossen ist, als auch eine angesteuerte Lampe 17c der Blinklichtanlage 14 des Hängers ausgefallen ist. Der Fehlerstrom zur Simulierung eines Fehlerzustandes für den Blinkgeber wird also nur in diesen Fällen in die Blinklichtanlage 10 eingespeist.

## Patentansprüche

1. Schaltungsanordnung für ein Zugfahrzeug eines aus dem Zugfahrzeug und einem elektrisch an das Zugfahrzeug anschließbaren Hänger bestehenden Wagenzuges, wobei
- das Zugfahrzeug einen Blinkgeber (19) und einen Fahrtrichtungsschalter (18) zum Betreiben seiner Blinklichtanlage (10) aufweist, die über die Schaltungsanordnung (11) mit einer Blinklichtanlage (14) des Hängers verbindbar ist, deren Lampen (16c, 17c) je über eine zugeordnete, von dem Blinkgeber (19) angesteuerte Treiberschaltung (42) mit hochohmigem Eingang betrieben werden;
- der Blinkgeber (19) den Ausfall einer angesteuerten Lampe (16a, 17a, 16b, 17b) der Blinklichtanlage (10) des Zugfahrzeuges als Fehlerzustand erkennt und diesen Fehlerzustand meldet;
- und wobei die Schaltungsanordnung (11) einen Ausfall einer angesteuerten Lampe (16c, 17c) der Blinklichtanlage (14) des Hängers erkennt und bei Vorliegen eines solchen Ausfalls einen von dem Blinkgeber (19) erkennbaren Fehlerzustand hervorruft,
dadurch gekennzeichnet, daß die Schaltungsanordnung (11) bei Ausfall einer angesteuerten Lampe (16c, 17c) der Blinklichtanlage (10) des Hängers in die von dem Blinkgeber (19) angesteuerten und mit einem Betriebsstrom (49) versorgten entsprechenden Lampen (16a, 16b, 17a, 17b) der Blinklichtanlage (10) des Zugfahrzeuges zusätzlich einen Fehlerstrom (48) einspeist.

2. Schaltungsanordnung nach Anspruch 1, dadurch gekennzeichnet, daß der in einer Lampe (16a, 16b, 17a, 17b) fließende Betriebsstrom und der in der selben Lampe (16a, 16b, 17a, 17b) fließende Fehlerstrom (48) etwa die gleiche Größenordnung aufweisen.

3. Schaltungsanordnung nach Anspruch 1 oder 2, dadurch gekennzeichnet, daß sie eine Fehlererkennungsschaltung (44, 61) aufweist, die bei mit der Schaltungsanordnung (11) verbundener Blinklichtanlage (14) des Hängers den Ausfall einer Lampe (16c, 17c) der Blinklichtanlage (14) erkennt und ein Schaltorgan (32; 33, 62) betätigt, das den Fehlerstrom (48) einspeist.

4. Schaltungsanordnung nach Anspruch 3, dadurch gekennzeichnet, daß das Schaltorgan (32) ein Relais (33) mit einem Schließkontaktpaar (34) ist.

5. Schaltungsanordnung nach Anspruch 3, dadurch gekennzeichnet, daß das Schaltorgan (32) ein Halbleiterschalter (62) ist.

6. Schaltungsanordnung nach einem der Ansprüche 1 bis 5, dadurch gekennzeichnet, daß zwischen dem Eingang der Treiberschaltung (42) und dem Blinkgeber (19) ein Zeitschaltglied (38, 39) angeordnet ist.

7. Schaltungsanordnung nach Anspruch 6, dadurch gekennzeichnet, daß das Zeitschaltglied (38) ein Monoflop (39) ist.

8. Schaltungsanordnung nach einem der Ansprüche 3 bis 7, dadurch gekennzeichnet, daß das Schaltorgan (32) nach seiner Betätigung durch die Fehlererkennungsschaltung (44, 61) über eine Verzögerungsschaltung (53) wieder in seinen Ruhezustand versetzbar ist.

9. Schaltungsanordnung nach einem der Ansprüche 1 bis 8, dadurch gekennzeichnet, daß der Fehlerstrom (48) über eine Widerstandsstrecke (51) in die Lampen (16a, 16b, 17a, 17b) der Blinklichtanlage (10) des Zugfahrzeuges eingespeist wird, und daß ein Meßschaltung (57) vorgesehen ist, die über der Widerstandsstrecke (51) einen Spannungsabfall (56) mißt und in Abhängigkeit von dem Spannungsabfall (56) den Fehlerstrom (48) wieder abschaltet.

10. Schaltungsanordnung nach einem der Ansprüche 1 bis 9, dadurch gekennzeichnet, daß sie je Fahrtrichtungsseite mit je einer Baugruppe (11a, 11b) im Strompfad (64) zwischen der vorderen (17a) und der hinteren (17b) Lampe der Blinklichtanlage (10) des Zugfahrzeuges liegt und den Fehlerstrom (48) nur in die jeweils hintere Lampe (16b, 17b) einspeist.

11. Schaltungsanordnung nach Anspruch 10, dadurch gekennzeichnet, daß die Baugruppe (11a, 11b) eine Diode (67) umfaßt, die in dem Strompfad (36a, 36b; 64) zwischen der vorderen (16a, 17a) und der hinteren (16b, 17b) Lampe der Blinklichtanlage (10) des Zugfahrzeuges liegt.

12. Schaltungsanordnung nach Anspruch 11, dadurch gekennzeichnet, daß der Fehlerstrom (48) an der Kathodenseite (66) der Diode (67) eingespeist wird.

13. Schaltungsanordnung nach einem der Ansprüche 11 oder 12, dadurch gekennzeichnet, daß von der Anodenseite (65) der Diode (66) eine Ansteuerleitung zu der Treiberschaltung (60) führt.

14. Schaltungsanordnung nach Anspruch 3 und einem der Ansprüche 11 oder 12, dadurch gekennzeichnet, daß von der Anodenseite (65) der Diode (66) eine Ansteuerleitung zu dem Schaltorgan (32) führt.

15. Schaltungsanordnung nach einem der Ansprüche 1 bis 14, dadurch gekennzeichnet, daß sie eine Hängererkennungsschaltung (81) aufweist, die eine mit der Schaltungsanordnung (11) verbundene Blinklichtanlage (14) eines Hängers erkennt.

16. Schaltungsanordnung nach einem der Ansprüche 1 bis 15, dadurch gekennzeichnet, daß sie einer Interface-Schaltung zugeordnet ist, die Lampen (85) einer Beleuchtungsanlage des Zugfahrzeuges mit zugeordneten Lampen (85') einer Beleuchtungsanlage des Hängers über Treiberschaltungen (84) verbindet, die von den einzelnen Lampen (85) des Zugfahrzeuges Signalspannungen hochohmig abgreifen.

17. Schaltungsanordnung nach Anspruch 16, dadurch gekennzeichnet, daß die Treiberschaltungen (84) an ihrem Ausgang kurzschlußfest sind.

18. Schaltungsanordnung nach einem der Ansprüche 16 oder 17, dadurch gekennzeichnet, daß bei mit der Interface-Schaltung verbundener Beleuchtungsanlage des Hängers die Hängererkennungsschaltung (81) mit Lampen (85') der Beleuchtungsanlage des Hängers verbunden ist.

19. Schaltungsanordnung nach einem der Ansprüche 16 bis 18, dadurch gekennzeichnet, daß bei mit der Interface-Schaltung verbundener Beleuchtungsanlage des Hängers die Hängererkennungsschaltung (81) mit einem Hängererkennungskontakt (83) verbunden ist, der auf Masse liegt.

20. Schaltungsanordnung nach einem der Ansprüche 16 bis 19, dadurch gekennzeichnet, daß die Hängererkennungsschaltung (81) mit ausgewählten Treiberschaltungen (84) verbunden ist, derart, daß sie einen Stromfluß durch die entsprechenden Lampen (85') der Beleuchtungsanlage des Hängers erkennt.

21. Schaltungsanordnung nach einem der Ansprüche 3 bis 20, dadurch gekennzeichnet, daß die Fehlererkennungsschaltung (44) den Spannungsabfall über Lampen (16c, 17c) der Blinklichtanlage (14) des Hängers mißt.

22. Schaltungsanordnung nach Anspruch 21, dadurch gekennzeichnet, daß die Fehlererkennungsschaltung (44) ein Integrierglied (78) aufweist, derart, daß bei Blinken der Lampe (16c, 17c) der Blinklichtanlage (14) des Hängers die Fehlererkennungsleitung (44) auf ihrer Ausgangsleitung (45) ein konstantes Signal abgibt.

23. Schaltungsanordnung nach Anspruch 22, dadurch gekennzeichnet, daß die Fehlererkennungsschaltung (44) und die Hängererkennungsschaltung (81) an ihren Ausgängen über eine Logik-Schaltung (46) miteinander verknüpft sind, wobei die Logik-Schaltung (46) in Abhängigkeit von den Signalen der Fehlererkennungsschaltung (44) und der Hängererkennungsschaltung (81) das Schaltorgan (32) einschaltet.

## Claims

1. Circuit arrangement for a tractor unit of a truck consisting of the tractor unit and a trailer which can be electrically attached to the tractor unit wherein;
- the tractor unit has a flasher (19) and a direction-of-travel switch (18) for operating its flasher system (10) which can be connected via the circuit arrangement (11) to a trailer flasher system (14) of which the lamps (16c, 17c) are each operated via an associated driver circuit (42), controlled by the flasher (19), with a high-resistance input;
- the flasher (19) detects the failure of a controlled lamp (16a, 17a, 16b, 17b) of the tractor unit flasher system (10) as a fault state and announces this fault state;
- and wherein the circuit arrangement (11) detects a failure of a controlled lamp (16c, 17c) of the trailer flasher system (14) and, in the presence of such a failure, produces a fault state which is detectable by the flasher (19),
characterized in that during the failure of a controlled lamp (16c, 17c) of the trailer flasher system (10), the circuit arrangement (11) additionally supplies a fault current (48) into the corresponding lamps (16a, 16b, 17a, 17b) of the tractor unit flasher system (10) which are controlled by the flasher (19) and are supplied with an operating current (49).

2. Circuit arrangement according to claim 1, characterized in that the operating current flowing in a lamp (16a, 16b, 17a, 17b) and the fault current (48) flowing in the same lamp (16a, 16b, 17a, 17b) have roughly the same magnitude.

3. Circuit arrangement according to claim 1 or 2, characterized in that it has a fault-detecting circuit (44, 61) which detects the failure of a lamp (16c, 17c) of the flasher system (14) when the trailer flasher system (14) is connected to the circuit arrangement (11) and actuates a switching member (32; 33, 62) which supplies the fault current (48).

4. Circuit arrangement according to claim 3, characterized in that the switching member (32) is a relay (33) with a pair of make-contacts (34).

5. Circuit arrangement according to claim 3, characterized in that the switching member (32) is a semiconductor switch (62).

6. Circuit arrangement according to one of claims 1 to 5, characterized in that a time switch (38, 39) is arranged between the input of the driver circuit (42) and the flasher (19).

7. Circuit arrangement according to claim 6, characterized in that the time switch (38) is a monoflop (39).

8. Circuit arrangement according to one of claims 3 to 7, characterized in that the switching member (32) can be reset into its rest state via a delay circuit (53) after being actuated by the fault-detecting circuit (44, 61).

9. Circuit arrangement according to one of claims 1 to 8, characterized in that the fault current (48) is supplied via a resistance section (51) into the lamps (16a, 16b, 17a, 17b) of the tractor unit flasher system (10) and in that a measuring circuit (57) is provided which measures a voltage drop (56) over the resistance section (51) and switches off the fault current (48) again as a function of the voltage drop (56).

10. Circuit arrangement according to one of claims 1 to 9, characterized in that, on each direction-of-travel side, it is located with a respective module (11a, 11b) in the current path (64) between the front lamp (17a) and the rear lamp (17b) of the tractor unit flasher system (10) and supplies the fault current (48) only into the rear respective lamp (16b, 17b).

11. Circuit arrangement according to claim 10, characterized in that the module (11a, 11b) comprises a diode (67) which is located in the current path (36a, 36b; 64) between the front lamp (16a, 17a) and the rear lamp (16b, 17b) of the tractor unit flasher system (10).

12. Circuit arrangement according to claim 11, characterized in that the fault current (48) is supplied on the cathode side (66) of the diode (67).

13. Circuit arrangement according to one of claims 11 or 12, characterized in that a control line leads from the anode side (65) of the diode (66) to the driver circuit (60).

14. Circuit arrangement according to claim 3 and one of claims 11 or 12, characterized in that a control line leads from the anode side (65) of the diode (66) to the switching member (32).

15. Circuit arrangement according to one of claims 1 to 14, characterized in that it has a trailer-detecting circuit (81) which detects a trailer flasher system (14) connected to the circuit arrangement (11).

16. Circuit arrangement according to one of claims 1 to 15, characterized in that it is associated with an interface circuit which connects lamps (85) of a tractor unit lighting system with associated lamps (85') of a trailer lighting system via driver circuits (84) which pick off signal voltages with high resistance from the individual lamps (85) of the tractor unit.

17. Circuit arrangement according to claim 16, characterized in that the driver circuits (84) are resistant to short-circuits at their output.

18. Circuit arrangement according to one of claims 16 or 17, characterized in that, when the trailer lighting system is connected to the interface circuit, the trailer-detecting circuit (81) is connected to lamps (85') of the trailer lighting system.

19. Circuit arrangement according to one of claims 16 to 18, characterized in that, when the trailer lighting system is connected to the interface circuit, the trailer-detecting circuit (81) is connected to a trailer-detecting contact (83) which is earthed.

20. Circuit arrangement according to one of claims 16 to 19, characterized in that the trailer-detecting circuit (81) is connected to selected driver circuits (84) in such a way that it detects a flow of current through the corresponding lamps (85') of the trailer lighting system.

21. Circuit arrangement according to one of claims 3 to 20, characterized in that the fault-detecting circuit (44) measures the voltage drop over lamps (16c, 17c) of the trailer flasher system (14).

22. Circuit arrangement according to claim 21, characterized in that the fault-detecting circuit (44) has an integration element (78) in such a way that the fault-detecting line (44) delivers a constant signal on its output line (45) during flashing of the lamp (16c, 17c) of the trailer flasher system (14).

23. Circuit arrangement according to claim 22, characterized in that the fault-detecting circuit (44) and the trailer-detecting circuit (81) are linked to one another at their outputs via a logic circuit (46), the logic circuit (46) switching on the switching member (32) as a function of the signals of the fault-detecting circuit (44) and the trailer-detecting circuit (81).

## Revendications

1. Circuit pour un véhicule tracteur d'un ensemble roulant constitué par le véhicule tracteur et par une remorque pouvant se raccorder électriquement au tracteur,
- le véhicule tracteur étant équipé d'une centrale de clignotement (19) et d'une commande d'indicateurs de changement de direction (18) pour faire fonctionner son équipement de feux clignotants (10) qui peut être raccordé, par l'intermédiaire du circuit (11), à l'équipement de feux clignotants (14) d'une remorque, dont les feux (16c, 17c) peuvent fonctionner chacun avec une entrée haute impédance par l'intermédiaire d'un circuit d'attaque (42) correspondant commandé par la centrale de clignotement (19) ;
- la centrale de clignotement (19) reconnaissant la panne d'un feu commandé (16a, 17a, 16b, 17b) de l'équipement de feux clignotants (10) du tracteur comme étant un état de défaut et signalant cet état de défaut ;
- et le circuit (11) reconnaissant la panne d'un feu commandé (16c, 17c) de l'équipement de feux clignotants (14) de la remorque comme étant un état de défaut et, en présence de cette panne, provoquant un état de défaut reconnaissable par la centrale de clignotement (19),
caractérisé en ce que le circuit (11), en cas de panne d'un feu commandé (16c, 17c) de l'équipement de feux clignotants (10) de la remorque, envoie dans les lampes correspondantes (16a, 16b, 17a, 17b) de l'équipement de feux clignotants (10) du véhicule tracteur, commandées par la centrale de clignotement (19) et parcourues par un courant nominal (49), un courant de défaut supplémentaire (48).

2. Circuit selon la revendication 1, caractérisé en ce que le courant nominal qui circule dans l'une des lampes (16a, 16b, 17a, 17b) et le courant de défaut (48) qui circule dans cette même lampe (16a, 16b, 17a, 17b) sont pratiquement du même ordre de grandeur.

3. Circuit selon l'une ou l'autre des revendications 1 et 2, caractérisé en ce qu'il comporte un circuit de détection de défaut (44, 61) qui, lorsque l'équipement de feux clignotants (14) de la remorque est raccordé au circuit (11), détecte la panne d'un feu (16c, 17c) de l'équipement de feux clignotants (14) et actionne un organe de commutation (32 ; 33, 62) qui envoie dans le circuit un courant de défaut (48).

4. Circuit selon la revendication 3, caractérisé en ce que l'organe de commutation (32) est un relais (33) doté d'une paire de contacts à fermeture (34).

5. Circuit selon la revendication 3, caractérisé en ce que l'organe de commutation (32) est un commutateur statique (62).

6. Circuit selon l'une quelconque des revendications 1 à 5, caractérisé en ce que, entre l'entrée du circuit d'attaque (42) et la centrale de clignotement (19), est placé un élément de commutation temporisé (38, 39).

7. Circuit selon la revendication 6, caractérisé en ce que l'élément de commutation temporisé (38) est une bascule monostable (39).

8. Circuit selon l'une quelconque des revendications 3 à 7, caractérisé en ce que l'organe de commutation (32), après son activation par le circuit de détection de défaut (44, 61), peut être ramené à l'état de repos par un circuit temporisateur (53).

9. Circuit selon l'une quelconque des revendications 1 à 8, caractérisé en ce que le courant de défaut (48) alimente par l'intermédiaire d'un circuit résistif (51) les feux (16a, 16b, 17a, 17b) de l'équipement de feux clignotants (10) du véhicule tracteur et en ce qu'un circuit de mesure (57) est prévu pour mesurer une chute de tension (56) aux bornes du circuit résistif (51) et pour couper à nouveau le courant de défaut (48) en fonction de la chute de tension (56).

10. Circuit selon l'une quelconque des revendications 1 à 9, caractérisé en ce que celui-ci, en fonction du côté de changement de direction, insère, pour chacune d'elle, un module (11a, 11b) dans la branche de circuit (64) entre le feu avant (17a) et le feu arrière (17b) de l'équipement de feux clignotants (10) du véhicule tracteur et n'envoie le courant de défaut (48) que dans le feu arrière (16b, 17b) concerné.

11. Circuit selon la revendication 10, caractérisé en ce que le module (11a, 11b) comporte une diode (67) qui est placée dans la branche de circuit (36a, 36b ; 64) entre le feu avant (16a, 17a) et le feu arrière (16b, 17b) de l'équipement de feux clignotants (10) du véhicule tracteur.

12. Circuit selon la revendication 11, caractérisé en ce que le courant de défaut (48) est envoyé du côté de la cathode (66) de la diode (67).

13. Circuit selon l'une ou l'autre des revendications 11 et 12, caractérisé en ce qu'une ligne de commande relie le côté anode (65) de la diode (66) au circuit d'attaque (60).

14. Circuit selon la revendication 3 ou selon l'une ou l'autre des revendications 11 et 12, caractérisé en ce qu'une ligne de commande relie le côté anode (65) de la diode (66) à l'organe de commutation (32).

15. Circuit selon l'une quelconque des revendications 1 à 14, caractérisé en ce qu'il comporte un circuit de détection de remorque (81) qui détecte l'équipement de feux clignotants (14) d'une remorque raccordée au circuit (11).

16. Circuit selon l'une quelconque des revendications 1 à 15, caractérisé en ce qu'il lui est adjoint un circuit d'interface qui relie les feux (85) d'un équipement d'éclairage du véhicule tracteur aux feux correspondants (85') d'un équipement d'éclairage de la remorque, par l'intermédiaire de circuits d'attaque (84) qui captent des tensions de signal haute impédance provenant des différents feux (85) du véhicule tracteur.

17. Circuit selon la revendication 16, caractérisé en ce que les circuits d'attaque (84) sont protégés en sortie contre les courts-circuits.

18. Circuit selon l'une ou l'autre des revendications 16 et 17, caractérisé en ce que, lorsque l'équipement d'éclairage de la remorque est raccordé au circuit d'interface, le circuit de détection de remorque (81) est relié aux feux (85') de l'équipement d'éclairage de la remorque.

19. Circuit selon l'une quelconque des revendications 16 à 18, caractérisé en ce que, lorsque l'équipement d'éclairage de la remorque est raccordé au circuit d'interface, le circuit de détection de remorque (81) est relié à un contact de détection de remorque (83) qui est relié à la masse.

20. Circuit selon l'une quelconque des revendications 16 à 19, caractérisé en ce que le circuit de détection de remorque (81) est relié de façon sélective à des circuits d'attaque (84), de telle sorte qu'il détecte un passage de courant dans les feux correspondants (85') de l'équipement d'éclairage de la remorque.

21. Circuit selon l'une quelconque des revendications 3 à 20, caractérisé en ce que le circuit de détection de remorque (44) mesure la chute de tension sur les feux (16c, 17c) de l'équipement de feux clignotants (14) de la remorque.

22. Circuit selon la revendication 21, caractérisé en ce que le circuit de détection de défaut (44) comporte un circuit intégrateur (78) de telle sorte que lorsque le feu (16c, 17c) de l'équipement de feux clignotants (14) de la remorque clignote, le circuit de détection de défaut (44) délivre un signal continu sur sa ligne de sortie (45).

23. Circuit selon la revendication 22, caractérisé en ce que le circuit de détection de défaut (44) et le circuit de détection de remorque (81) sont combinés en sortie par un circuit logique (46), le circuit logique (46) faisant fonctionner l'organe de commutation (32) en fonction des signaux provenant du circuit de détection de défaut (44) et du circuit de détection de remorque (81).
